Europäisches Patentamt

European Patent Office

Office européen des brevets

(19)

(11) **EP 1 160 158 B1**

(12) **FASCICULE DE BREVET EUROPEEN**

(45) Date de publication et mention
de la délivrance du brevet:
**16.06.2004 Bulletin 2004/25**

(51) Int Cl.⁷: **B64C 13/50**, G05D 1/00

(21) Numéro de dépôt: **01401281.9**

(22) Date de dépôt: **17.05.2001**

(54) **Système de commande électrique pour une gouverne de direction d'aéronef**

Elektrisches Seitenrudersteuerungssystem für Luftfahrzeuge

Electric control system for an aircraft rudder

(84) Etats contractants désignés:
**AT BE CH CY DE DK ES FI FR GB GR IE IT LI LU
MC NL PT SE TR**

(30) Priorité: **29.05.2000 FR 0006829**

(43) Date de publication de la demande:
**05.12.2001 Bulletin 2001/49**

(73) Titulaire: **AIRBUS FRANCE**
**31060 Toulouse (FR)**

(72) Inventeurs:
• **Kubica, François**
**31100 Toulouse (FR)**

• **Cazy, Daniel**
**31820 Pibrac (FR)**
• **Marquier, Sylvie**
**31400 Toulouse (FR)**

(74) Mandataire: **Bonnetat, Christian**
**CABINET BONNETAT**
**29, rue de St. Pétersbourg**
**75008 Paris (FR)**

(56) Documents cités:
**US-A- 3 033 496        US-A- 5 170 969**

# Description

La présente invention concerne un système de commande électrique pour une gouverne de direction d'aéronef.

On sait que, actuellement, dans la plupart des aéronefs, la commande d'une gouverne de direction est obtenue par une liaison mécanique interposée entre le palonnier actionné par le pilote et ladite gouverne de direction. Cependant, la commande électrique d'une telle gouverne de direction a déjà été envisagée, à l'image de ce qui se fait déjà pour les autres gouvernes, les volets, les ailerons, les spoilers, etc ...

Par ailleurs, on sait que le dimensionnement d'une telle gouverne de direction résulte de calculs de charges appliquées audit aéronef, lors de manoeuvres normalisées. Pour le roulis et le lacet, ces manoeuvres consistent à solliciter la gouverne de direction par des actions brusques sur le palonnier, jusqu'au plein débattement de ladite gouverne.

L'objet de la présente invention a pour objet un système de commande électrique pour une gouverne de direction, grâce auquel il est possible de limiter les charges latérales appliquées en manoeuvre sur ladite gouverne et donc de réduire le dimensionnement et la masse de cette dernière, sans pour autant réduire les qualités de vol de l'aéronef ou la sécurité de vol.

A cette fin, selon l'invention, le système de commande électrique pour une gouverne de direction d'aéronef, ladite gouverne étant montée rotative autour d'un axe pour pouvoir prendre n'importe quelle position angulaire à l'intérieur d'une plage de débattement s'étendant de part et d'autre de la position neutre de la gouverne et limitée de chaque côté de cette position neutre par une valeur maximale de débattement, et ledit système comportant :

- un palonnier actionné par le pilote et associé à un transducteur délivrant un ordre électrique de pilotage représentatif de l'action du pilote sur ledit palonnier ; et
- un actionneur recevant un ordre de commande dérivé dudit ordre de pilotage et déplaçant ladite gouverne de direction autour dudit axe, est remarquable :

- en ce qu'il comporte, entre ledit palonnier et ledit actionneur, des moyens de filtrage du type passe-bas recevant ledit ordre de pilotage dudit transducteur et engendrant ledit ordre de commande pour ledit actionneur ; et
- en ce que la constante de temps desdits moyens de filtrage est d'autant plus élevée que l'amplitude dudit ordre de pilotage correspond à une fraction plus grande de ladite valeur maximale de débattement.

Ainsi, grâce à la présente invention, on introduit, dans les ordres de pilotage au palonnier, un filtrage non linéaire qui dépend du débattement disponible pour la gouverne de direction, ce filtrage étant d'autant plus important que ladite gouverne de direction s'approche des butées limitant le débattement maximal, ce qui limite les charges appliquées à ladite gouverne et permet donc de réduire le dimensionnement et la masse de cette dernière.

Par ailleurs, on sait qu'il est usuel qu'un système de commande du type rappelé ci-dessus comporte de plus des moyens de stabilisation en lacet engendrant un ordre de stabilisation qui est ajouté à l'ordre de pilotage au palonnier. Dans ce cas, le niveau des charges maximales sur ladite gouverne de direction devient particulièrement critique, lorsque ces ordres sont de même signe.

Aussi, selon une autre particularité de la présente invention, lorsque ledit système de commande comporte de plus des moyens de stabilisation en lacet dudit aéronef engendrant un ordre de stabilisation en lacet et un premier additionneur effectuant la somme dudit ordre de stabilisation en lacet et dudit ordre de commande dudit actionneur, on prévoit des moyens aptes à déterminer si ledit ordre de pilotage et ledit ordre de stabilisation en lacet sont de même signe ou de signes opposés, et lesdits moyens de détermination agissent sur lesdits moyens de filtrage pour en augmenter la constante de temps lorsque ledit ordre de pilotage et ledit ordre de stabilisation sont de même signe.

Ainsi, on réduit encore plus les charges appliquées à la gouverne de direction, en filtrant davantage l'ordre de pilotage au palonnier quand ladite gouverne est proche de sa position de débattement maximale et que cet ordre et l'ordre de stabilisation en lacet sont de même signe.

Dans un mode de réalisation pratique, le système conforme à la présente invention comporte :

- un limiteur recevant ledit ordre de pilotage et délivrant un signal de sortie qui est :

  . soit ledit ordre de pilotage, lorsque l'amplitude de celui-ci correspond à une valeur de débattement inférieure à une limite égale à une fraction prédéterminée de ladite valeur maximale de débattement ;
  . soit une valeur limite correspondant à ladite limite, lorsque l'amplitude dudit ordre de pilotage est supérieure à cette valeur limite ;

- un premier filtre passe-bas présentant une première constante de temps et recevant ledit signal de sortie dudit limiteur ;
- un soustracteur effectuant la différence entre ledit ordre de pilotage et ledit signal de sortie dudit limiteur ;
- un deuxième filtre passe-bas présentant une deuxième constante de temps supérieure à ladite première constante de temps et recevant ladite différence engendrée par ledit soustracteur ; et

- un second additionneur effectuant la somme des signaux de sortie en provenance desdits premier et deuxième filtres, pour engendrer un ordre de pilotage filtré pour ledit actionneur.

Dans le cas où ce système est pourvu des moyens de stabilisation en lacet mentionnés ci-dessus, il peut comporter de plus :

- un troisième filtre passe-bas présentant une troisième constante de temps supérieure à ladite deuxième constante de temps et recevant ladite différence engendrée par ledit soustracteur ;
- un commutateur commandé, interposé entre lesdits deuxième et troisième filtres passe-bas, d'une part, et ledit second additionneur, d'autre part, pour pouvoir adresser audit second additionneur, soit le signal de sortie provenant dudit deuxième filtre passe-bas, soit le signal de sortie provenant dudit troisième filtre passe-bas ; et
- des moyens de commande dudit commutateur tels que celui-ci :

  . relie ledit deuxième filtre passe-bas audit second additionneur, lorsque ledit ordre de stabilisation en lacet et ledit ordre électrique de pilotage sont de signes opposés ; ou
  . relie ledit troisième filtre passe-bas audit second additionneur, lorsque ledit ordre de stabilisation en lacet et ledit ordre électrique de pilotage sont de même signe.

De préférence, lesdits premier, deuxième et troisième filtres passe-bas sont de type premier ordre avec une fonction de transfert de la forme $\frac{1}{1+\tau p}$, $\tau$ étant la constante de temps respective $\tau1$, $\tau2$ ou $\tau3$ des premier, deuxième et troisième filtres et p la variable de LAPLACE.

Les première ($\tau1$), deuxième ($\tau2$) et troisième ($\tau3$) constantes de temps peuvent présenter des valeurs respectivement comprises entre 100 ms et 500 ms ; 500 ms et 1 seconde ; et 1 seconde et 2 secondes.

Par ailleurs, ladite limite peut correspondre à environ 70% de ladite valeur maximale de débattement de ladite gouverne de direction.

Les figures du dessin annexé feront bien comprendre comment l'invention peut être réalisée. Sur ces figures, des références identiques désignent des éléments semblables.

La figure 1 montre le schéma synoptique d'un exemple de réalisation du système de commande électrique conforme à la présente invention.

La figure 2 est un diagramme illustrant, en vue en plan, les mouvements de la gouverne de direction d'aéronef commandée par le système de la figure 1.

Les figures 3, 4 et 5 illustrent le filtrage des ordres de commande de la gouverne de direction, respectivement pour trois amplitudes d'ordre différentes.

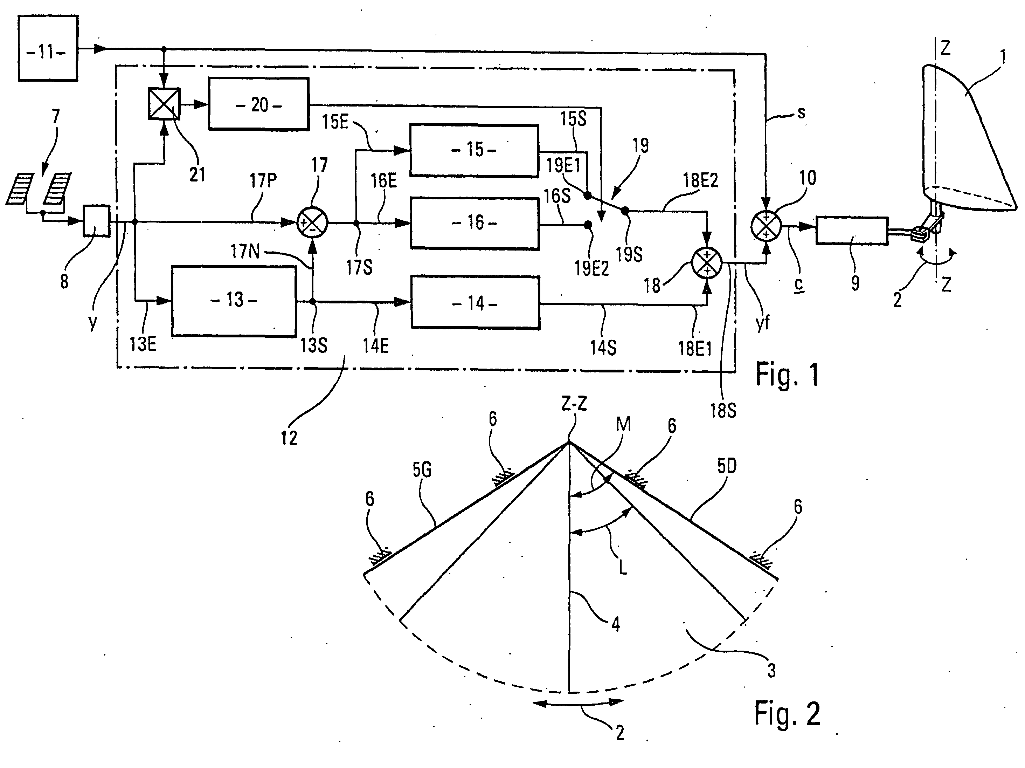

Le système de commande électrique, conforme à la présente invention et représenté sur la figure 1, est destiné à l'actionnement d'une gouverne de direction 1 d'aéronef, montée rotative dans les deux sens autour d'un axe Z-Z, de la façon symbolisée par la double flèche 2. Comme cela est illustré par la vue en plan schématique de la figure 2, la gouverne 1 peut prendre n'importe quelle position angulaire autour dudit axe Z-Z à l'intérieur d'une plage de débattement 3, s'étendant de part et d'autre de la position aérodynamiquement neutre 4 de ladite gouverne 1. La plage de débattement 3 est limitée de chaque côté de la position neutre 4 par une position 5D ou 5G, correspondant à la valeur maximale de débattement M (à droite et à gauche) et matérialisée par des butées 6 pour la gouverne 1.

Le système de commande électrique comporte un palonnier 7, à la disposition du pilote (non représenté), associé à un transducteur 8 délivrant un ordre électrique de pilotage en lacet $\underline{y}$, ainsi qu'un actionneur 9 recevant, de la sortie d'un additionneur 10, un ordre de commande $\underline{c}$ apte à déplacer ladite gouverne 1 autour de l'axe Z-Z.

Le système de commande électrique de la figure 1 comporte de plus des moyens de stabilisation en lacet 11 (calculateur de vol) engendrant un ordre de stabilisation en lacet $\underline{s}$ adressé à l'une des entrées de l'additionneur 10. L'autre entrée dudit additionneur 10 reçoit un ordre yf, correspondant audit ordre de pilotage en lacet $\underline{y}$ après filtrage par un agencement 12, disposé entre le transducteur 8 et l'additionneur 10.

L'ordre de commande $\underline{c}$ de l'actionneur 9 est donc la somme de l'ordre filtré yf et de l'ordre de stabilisation en lacet $\underline{s}$.

L'agencement de filtrage 12 comporte un limiteur 13 recevant à son entrée 13E ledit ordre de pilotage en lacet $\underline{y}$ et apte à le limiter en amplitude à une valeur limite $\ell$ correspondant à une fraction prédéterminée L de la valeur maximale de débattement M. Par exemple, la limite L est égale à 70% de la valeur maximale M (voir la figure 2). Le limiteur 13 fonctionne de la façon suivante :

- si l'amplitude y1 de l'ordre de pilotage $\underline{y}$ est inférieure à la valeur limite $\ell$, c'est ledit signal $\underline{y}$ qui apparaît à la sortie 13S du limiteur 13 ;
- en revanche, si l'amplitude y2 de l'ordre de pilotage $\underline{y}$ est supérieure à la valeur limite $\ell$, c'est cette valeur limite $\ell$ qui est présente à ladite sortie 13S.

Ledit agencement de filtrage 12 comporte de plus trois filtres passe-bas du premier ordre 14, 15 et 16, un soustracteur 17, un additionneur 18, un commutateur commandé 19, un dispositif de commande 20 pour ledit commutateur et un multiplicateur 21.

Ces différents éléments sont reliés de la façon suivante :

- l'entrée 14E et la sortie 14S du filtre 14 sont respectivement reliées à la sortie 13S du limiteur 13 et à l'une des entrées 18E1 de l'additionneur 18 ;
- l'entrée positive 17P et l'entrée négative 17N du soustracteur 17 sont respectivement reliées à la sortie du transducteur 8 et à la sortie 13S du limiteur 13, de sorte que ledit soustracteur 17 délivre à sa sortie 17S la différence entre l'ordre électrique de pilotage en lacet y et ce même ordre limité par le limiteur 13 ;
- les entrées 15E et 16E des filtres 15 et 16 sont reliées en commun à la sortie 17S du soustracteur 17 ;
- les sorties 15S et 16S des filtres 15 et 16 sont respectivement reliées aux deux entrées 19E1 et 19E2 du commutateur commandé 19 ;
- la sortie 19S du commutateur commandé 19 est reliée à l'autre entrée 18E2 de l'additionneur 18, de sorte que cette dernière reçoit soit le signal filtré par le filtre 15, soit le signal filtré par le filtre 16, en fonction de la position du commutateur 19 ;
- le dispositif de commande 20, actionnant le commutateur 19, est lui-même commandé par le multiplicateur 21 recevant, à la fois l'ordre de stabilisation en lacet s et l'ordre de pilotage en lacet y.

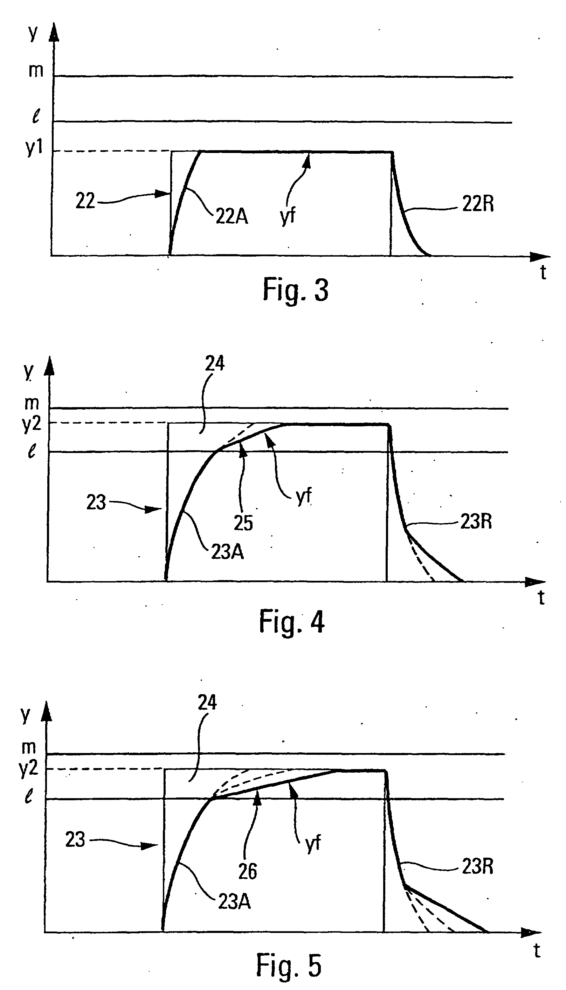

Le fonctionnement du système selon l'invention est décrit ci-après, en référence aux diagrammes des figures 3, 4 et 5, sur lesquels on a représenté l'ordre de pilotage en lacet y en fonction du temps t, lesdits diagrammes portant de plus les valeurs limites ℓ et m, correspondant respectivement aux valeurs angulaires limites L et M.

Sur la figure 3, on a représenté le cas dans lequel l'ordre commandé y se présente sous la forme d'un créneau 22, dont l'amplitude y1 est inférieure à la limite ℓ. Dans ce cas, le limiteur 13 laisse passer intégralement le créneau 22, qui apparaît à sa sortie 13S. Par suite :

- le soustracteur 17 reçoit le même créneau 22 sur ses deux entrées 17P et 17N, de sorte qu'à sa sortie 17S, aucun signal n'est présent et qu'aucun des filtres 15 et 16 n'est actif ;
- le filtre 14 reçoit le créneau 22 et le filtre en en arrondissant les fronts avant 22A et arrière 22R abrupts, de la façon représentée sur la figure 3.

Le signal yf est donc dans ce cas entièrement constitué de ce créneau à fronts avant et arrière arrondis 22A et 22R.

Si, maintenant, l'ordre commandé y se présente sous la forme d'un créneau 23, dont l'amplitude y2 est supérieure à la valeur limite ℓ (voir les figures 4 et 5), le limiteur 13 est actif et il délivre à sa sortie 13S, un créneau correspondant au créneau 23, mais limité à l'amplitude ℓ. Par suite :

- le filtre 14 reçoit le créneau 23, amputé de son excédent 24 au-delà de l'amplitude ℓ ; et
- le soustracteur 17 délivre à sa sortie 17S ledit excédent 24 au-delà de l'amplitude ℓ, adressé aux entrées 15E et 16E des filtres 15 et 16.

Le créneau 23, amputé de l'excédent 24, est filtré par le filtre 14, de la manière semblable à celle indiquée ci-dessus pour le créneau 22 (voir les fronts avant et arrière 23A et 23R).

De plus, ledit excédent 24 est filtré soit par le filtre 15, soit par le filtre 16, en fonction des signes des ordres y et s.

Si ces signes sont opposés, ce qui est détecté par le multiplicateur 21, le commutateur 19, commandé par le dispositif 20, relie la sortie 15S du filtre 15 à l'entrée 18E2 de l'additionneur 18, de sorte que cet excédent 24 est filtré par le filtre 15, plus fortement que le filtre 14 ne filtre le créneau 23 amputé, comme cela est indiqué par le segment courbe 25 sur la figure 4. Sur cette figure, à titre comparatif, on a représenté, en tirets, le prolongement du front avant arrondi 23A qui résulterait du filtrage par le filtre 14.

En revanche, si les ordres y et s sont de même signe, le dispositif 20, sous la commande du multiplicateur 21, fait basculer le commutateur 19, de façon que la sortie 16S du filtre 16 soit maintenant reliée à l'entrée 18E2 de l'additionneur 18. L'excédent 24 est alors plus fortement filtré par le filtre 16 que par le filtre 15, comme cela est montré par le segment courbe 26 de la figure 5. Sur cette dernière figure, on a représenté, en tirets, à des fins de comparaison, les prolongements du front avant arrondi 23A, qui résulteraient respectivement du filtrage par les filtres 14 et 15.

Dans les deux cas des figures 4 et 5, l'ordre filtré yf est alors constitué de la somme du créneau 23 amputé, filtré par le filtre 14, et de l'excédent 24, filtré soit par le filtre 15, soit par le filtre 16 (figure 4 ou figure 5).

Les filtres passe-bas 14, 15 et 16 présentent des constantes de temps, par exemple respectivement comprises entre 100 ms et 500 ms ; 500 ms et 1 seconde ; et 1 seconde et 2 secondes. Ainsi :

- le filtrage procuré par le filtre 14 correspond à des critères de qualité de vol élevée ;
- le filtre 15 permet une réduction importante des charges appliquées à la gouverne, lorsque l'action du palonnier et l'action du stabilisateur de lacet s'opposent ; et
- le filtre 16 permet une réduction importante desdites charges, même lorsque l'action du palonnier et l'action du stabilisateur de lacet s'ajoutent.

Une telle réduction des charges appliquées à la gouverne permet de réduire le dimensionnement, et donc la masse, de celle-ci.

**Revendications**

1. Système de commande électrique pour une gouverne de direction d'aéronef, ladite gouverne (1) étant montée rotative autour d'un axe (Z-Z) pour pouvoir prendre n'importe quelle position angulaire à l'intérieur d'une plage de débattement (3) s'étendant de part et d'autre de la position neutre (4) de la gouverne (1) et limitée de chaque côté de cette position neutre par une valeur maximale de débattement (M), et ledit système comportant :

   - un palonnier (7) actionné par le pilote et associé à un transducteur (8) délivrant un ordre électrique de pilotage (y) représentatif de l'action du pilote sur ledit palonnier (7) ; et
   - un actionneur (9) recevant un ordre de commande (c) dérivé dudit ordre de pilotage (y) et déplaçant ladite gouverne de direction (1) autour dudit axe (Z-Z),

   **caractérisé :**

   - **en ce qu'**il comporte, entre ledit palonnier (7) et ledit actionneur (9), des moyens de filtrage (12) du type passe-bas recevant ledit ordre de pilotage (y) dudit transducteur (8) et engendrant ledit ordre de commande (c) pour ledit actionneur (9) ; et
   - **en ce que** la constante de temps desdits moyens de filtrage (12) est d'autant plus élevée que l'amplitude dudit ordre de pilotage (y) correspond à une fraction plus grande de ladite valeur maximale de débattement (M).

2. Système selon la revendication 1, comportant de plus des moyens de stabilisation en lacet (11) dudit aéronef engendrant un ordre de stabilisation en lacet (s) et un premier additionneur (10) effectuant la somme dudit ordre de stabilisation en lacet et dudit ordre de commande dudit actionneur,
   **caractérisé :**

   - **en ce qu'**il comporte de plus des moyens (20, 21) aptes à déterminer si ledit ordre de pilotage (y) et ledit ordre de stabilisation en lacet (s) sont de même signe ou de signes opposés ; et
   - **en ce que** lesdits moyens de détermination (20, 21) agissent sur lesdits moyens de filtrage (12) pour en augmenter la constante de temps lorsque ledit ordre de pilotage et ledit ordre de stabilisation sont de même signe.

3. Système de commande selon la revendication 1, **caractérisé en ce qu'**il comporte :

   - un limiteur (13) recevant ledit ordre de pilotage (y) et délivrant un signal de sortie qui est :

      - soit ledit ordre de pilotage (y), lorsque l'amplitude (y1) de celui-ci correspond à une valeur de débattement inférieure à une limite (L) égale à une fraction prédéterminée de ladite valeur maximale de débattement (M) ;
      - soit une valeur limite (ℓ) correspondant à ladite limite (L), lorsque l'amplitude (y2) dudit ordre de pilotage (y) est supérieure à cette valeur limite (ℓ) ;

   - un premier filtre passe-bas (14) présentant une première constante de temps et recevant ledit signal de sortie dudit limiteur ;
   - un soustracteur (17) effectuant la différence entre ledit ordre de pilotage (y) et ledit signal de sortie dudit limiteur (13) ;
   - un deuxième filtre passe-bas (15) présentant une deuxième constante de temps supérieure à ladite première constante de temps et recevant ladite différence engendrée par ledit soustracteur (17) ; et
   - un second additionneur (18) effectuant la somme des signaux de sortie en provenance desdits premier et deuxième filtre (14, 15), pour engendrer un ordre de pilotage filtré (yf) pour ledit actionneur (9).

4. Système selon la revendication 3, **caractérisé en ce que** ledit premier filtre passe-bas (14) est de type premier ordre.

5. Système selon l'une des revendications 3 ou 4, **caractérisé en ce que** ladite première constante de temps dudit premier filtre passe-bas (14) est comprise entre 100 ms et 500 ms.

6. Système selon l'une des revendications 3 à5, **caractérisé en ce que** ledit deuxième filtre passe-bas (15) est de type premier ordre.

7. Système selon l'une des revendications 3 à 6, **caractérisé en ce que** ladite deuxième constante de temps dudit deuxième filtre passe-bas (15) est comprise entre 500 ms et 1 seconde.

8. Système selon l'une des revendications 3 à 7, **caractérisé en ce que** ladite limite (L) est égale à environ 70% de ladite valeur maximale de débattement (M).

9. Système selon la revendication 2 et l'une quelconque des revendications 3 à 8, **caractérisé en ce qu'**il comporte de plus :

   - un troisième filtre passe-bas (16) présentant une troisième constante de temps supérieure à ladite deuxième constante de temps et recevant ladite différence engendrée par ledit soustracteur (17) ;

- un commutateur commandé (19), interposé entre lesdits deuxième et troisième filtres passebas (15, 16), d'une part, et ledit second additionneur (18), d'autre part, pour pouvoir adresser audit second additionneur, soit le signal de sortie provenant dudit deuxième filtre passebas (15), soit le signal de sortie provenant dudit troisième filtre passe-bas (16) ; et
- des moyens de commande dudit commutateur tels que celui-ci :

    . relie ledit deuxième filtre passe-bas (15) audit second additionneur (18), lorsque ledit ordre de stabilisation en lacet (s) et ledit ordre électrique de pilotage (y) sont de signes opposés ; ou
    . relie ledit troisième filtre passe-bas (16) audit second additionneur (18), lorsque ledit ordre de stabilisation en lacet (s) et ledit ordre électrique de pilotage (y) sont de même signe.

10. Système selon la revendication 9, **caractérisé en ce que** ledit troisième filtre passebas (16) est de type premier ordre.

11. Système selon l'une des revendications 9 ou 10, **caractérisé en ce que** ladite troisième constante de temps dudit troisième filtre passe-bas (16) est comprise entre 1 seconde et 2 secondes.

**Patentansprüche**

1. Elektrisches Seitenrudersteuerungssystem für Luftfahrzeuge, wobei das Ruder (1) um eine Achse (Z-Z) drehbar angebracht ist, um innerhalb eines Ausschlagsbereichs (3), der sich beiderseits der neutralen Position (4) des Ruders (1) erstreckt und auf beiden Seiten dieser neutralen Position durch einen maximalen Ausschlagswert (M) begrenzt wird, eine beliebige Winkelstellung einnehmen zu können, und wobei das System Folgendes aufweist:

- ein Fußpedal (7), das vom Piloten betätigt wird und mit einem Signalumformer (8) verbunden ist, der einen elektrischen Steuerungsbefehl (y) liefert, der die Betätigung des Fußpedals (7) durch den Piloten wiedergibt; und
- einen Stellantrieb (9), der einen vom Steuerungsbefehl (y) abgeleiteten Stellbefehl (c) erhält, und der das Seitenruder (1) rund um die Achse (Z-Z) in die entsprechende Stellung dreht,

**dadurch gekennzeichnet,**

- **dass** es zwischen dem Fußpedal (7) und dem Stellantrieb (9) Filterungsvorrichtungen (12) in Tiefpassausführung aufweist, die den Steuerungsbefehl (y) des Signalumformers (8) empfangen und den Stellbefehl (c) für den Steilantrieb (9) erzeugen, und
- **dass** die Zeitkonstante der Filterungsvorrichtungen (12) umso größer ist, je größer die Amplitude des Steuerungsbefehls (y) ist, die einem Anteil des maximalen Ausschlagswerts (M) entspricht.

2. System gemäß Anspruch 1, wobei dieses außerdem Vorrichtungen zur Richtungsstabilisierung (11) des Luftfahrzeugs aufweist, die einen Befehl zur Richtungsstabilisierung (s) erzeugen, und einen ersten Addierer (10), der die Summe aus dem Befehl zur Richtungsstabilisierung und dem Stellbefehl des Stellantriebs bildet, **dadurch gekennzeichnet:**

- **dass** es außerdem Vorrichtungen (20, 21) aufweist, die geeignet sind um festzustellen, ob der Steuerungsbefehl (y) und der Befehl zur Richtungsstabilisierung (s) das gleiche Vorzeichen oder unterschiedliche Vorzeichen haben; und
- **dass** die Vorrichtungen zur Ermittlung des Vorzeichens (20, 21) auf die Filterungsvorrichtungen (12) wirken, um deren Zeitkonstante zu erhöhen, wenn der Steuerungsbefehl und der Stabilisierungsbefehl das gleiche Vorzeichen haben.

3. Steuerungssystem gemäß Anspruch 1, **dadurch gekennzeichnet, dass** es folgende Komponenten aufweist:

- einen Begrenzer (13), der den Steuerungsbefehl (y) empfängt und ein Ausgangssignal liefert, das:

    • entweder der Steuerungsbefehl (y) ist, wenn dessen Amplitude (y1) einem Ausschlagswert entspricht, der kleiner als eine Begrenzung (L) ist, die gleich einem zuvor festgelegten Anteil des maximalen Ausschlagswerts (M) ist;
    • oder ein Grenzwert ($\ell$) ist, der der Begrenzung (L) entspricht, wenn die Amplitude (y2) des Steuerungsbefehls (y) größer ist als dieser Grenzwert ($\ell$);

- ein erstes Tiefpassfilter (14), das eine erste Zeitkonstante aufweist und das Ausgangssignal des Begrenzers empfängt;
- einen Subtrahierer (17), der die Differenz zwischen dem Steuerungsbefehl (y) und dem Ausgangssignal des Begrenzers (13) bildet;

- ein zweites Tiefpassfilter (15), das eine zweite Zeitkonstante aufweist, die größer als die erste Zeitkonstante ist, und das die Differenz empfängt, die vom Subtrahierer (17) gebildet wird; und

- einen zweiten Addierer (18), der die Summe aus den Ausgangssignalen bildet, die vom ersten und vom zweiten Filter (14, 15) kommen; um einen gefilterten Steuerungsbefehl (yf) für den Stellantrieb (9) zu erzeugen.

4. System gemäß Anspruch 3,
   **dadurch gekennzeichnet, dass** das erste Tiefpassfilter (14) des Typs erster Ordnung ist.

5. System gemäß einem der Ansprüche 3 und 4,
   **dadurch gekennzeichnet, dass** die erste Zeitkonstante des ersten Tiefpassfilters (14) zwischen 100 ms und 500 ms beträgt.

6. System gemäß einem der Ansprüche 3 bis 5,
   **dadurch gekennzeichnet, dass** das zweite Tiefpassfilter (15) des Typs erster Ordnung ist.

7. System gemäß einem der Ansprüche 3 bis 6,
   **dadurch gekennzeichnet, dass** die zweite Zeitkonstante des zweiten Tiefpassfilters (15) zwischen 500 ms und 1 Sekunde beträgt.

8. System gemäß einem der Ansprüche 3 bis 7,
   **dadurch gekennzeichnet, dass** die Begrenzung (L) ungefähr 70% des maximalen Ausschlagswerts (M) beträgt.

9. System gemäß Anspruch 2 und einem beliebigen der Ansprüche 3 bis 8,
   **dadurch gekennzeichnet, dass** es außerdem folgende Komponenten aufweist:

   - ein drittes Tiefpassfilter (16), das eine dritte Zeitkonstante aufweist, die größer als die zweite Zeitkonstante ist, und das die Differenz empfängt, die vom Subtrahierer (17) gebildet wird;
   - einen gesteuerten Umschalter (19), der zwischen einerseits dem zweiten und dem dritten Tiefpassfilter (15, 16) und andererseits dem zweiten Addierer (18) eingefügt ist, um an den zweiten Addierer entweder das vom zweiten Tiefpassfilter (15) kommende Ausgangssignal oder das vom dritten Tiefpassfilter (16) kommende Ausgangssignal schicken zu können; und
   - Steuerungsvorrichtungen des Umschalters, die so beschaffen sind, dass dieser:

     • das zweite Tiefpassfilter (15) mit dem zweiten Addierer (18) verbindet, wenn der Befehl zur Richtungsstabilisierung (s) und der elektrische Steuerungsbefehl (y) - unterschiedliche Vorzeichen haben; oder
     • das dritte Tiefpassfilter (16) mit dem zweiten Addierer (18) verbindet, wenn der Befehl zur Richtungsstabilisierung (s) und der elektrische Steuerungsbefehl (y) das gleiche Vorzeichen haben.

10. System gemäß Anspruch 9,
    **dadurch gekennzeichnet, dass** das dritte Tiefpassfilter (16) des Typs erster Ordnung ist.

11. System gemäß einem der Ansprüche 9 und 10,
    **dadurch gekennzeichnet, dass** die dritte Zeitkonstante des dritten Tiefpassfitters (16) zwischen 1 Sekunde und 2 Sekunden beträgt.

**Claims**

1. An electrical fly-by-wire system for operating an aircraft rudder, said rudder (1) being mounted so that it can rotate about an axis (Z-Z) so that it can adopt any angular position whatsoever within a range of travel (3) extending on each side of the neutral position (4) of the rudder (1) and limited on each side of this neutral position by a maximum travel value (M), and said system comprising:

   - a rudder bar (7) actuated by the pilot and associated with a transducer (8) that delivers an electrical control command (y) that represents the action of the pilot on said rudder bar (7); and
   - an actuator (9) receiving an operating command (c) derived from said control command (y) and moving said rudder (1) about said axis (Z-Z),

   **characterized:**

   - **in that** it comprises, between said rudder bar (7) and said actuator (9), filtering means (12) of the low-pass type receiving said control command (y) from said transducer (8) and generating said operating command (c) for said actuator (9); and
   - **in that** the higher the fraction of said maximum travel value (M) to which the amplitude of said control command (y) corresponds, the higher the time constant of said filtering means (12).

2. The system as claimed in claim 1, additionally comprising means (11) for stabilizing said aircraft in terms of yaw generating a yaw-stabilizing command (s) and a first adder (10) summing said yaw-stabilizing command and said actuator operating command,
**characterized:**

- **in that** it also comprises means (20, 21) capable of determining whether said control command (y) and said yaw-stabilizing command (s) are of the same sign or of opposite signs; and
- **in that** said determining means (20, 21) act on said filtering means (12) to increase their time constant when said control command and said stabilizing command are of the same sign.

3. The operating system as claimed in claim 1, **characterized in that** it comprises:

- a limiter (13) receiving said control command (y) and delivering an output signal which is:

    • either said control command (y), when the amplitude (y1) thereof corresponds to a travel value below a limit (L) equal to a predetermined fraction of said maximum travel value (M);
    • or a limit value ($\ell$) corresponding to said limit (L) when the amplitude (y2) of said control command (y) is greater than this limit value ($\ell$);

- a first low-pass filter (14) having a first time constant and receiving said output signal from said limiter;
- a subtractor (17) calculating the difference between said control command (y) and said output signal from said limiter (13);
- a second low-pass filter (15) having a second time constant higher than said first time constant and receiving said difference calculated by said subtractor (17); and
- a second adder (18) summing the output signals from said first and second filters (14,15), so as to generate a filtered control command (yf) for said actuator (9).

4. The system as claimed in claim 3, **characterized in that** said first low-pass filter (14) is of the first-order type.

5. The system as claimed in one of claims 3 and 4, **characterized in that** said first time constant of said first low-pass filter (14) is between 100 ms and 500 ms.

6. The system as claimed in one of claims 3 to 5, **characterized in that** said second low-pass filter (15) is of first-order type.

7. The system as claimed in one of claims 3 to 6, **characterised in that** said second time constant of said second low-pass filter (15) is between 500 ms and 1 second.

8. The system as claimed in one of claims 3 to 7, **characterized in that** said limit (L) is equal to approximately 70% of said maximum travel value (M).

9. The system as claimed in claim 2 and any one of claims 3 to 8 **characterized in that** it additionally comprises:

- a third low-pass filter (16) having a third time constant higher than said second time constant and receiving said difference calculated by said subtractor (17);
- a controlled switch (19) inserted between said second and third low-pass filters (15, 16), on the one hand, and said second adder (18), on the other hand, so as to be able to send to said second adder, either the output signal from said second low-pass filter (15) or the output signal from said third low-pass filter (16); and
- means of controlling said switch in such a way that the latter:

    • connects said second low-pass filter (15) to said second adder (18) when said yaw-stabilizing command (s) and said electrical control command (y) are of opposite signs; or
    • connects said third low-pass filter (16) to said second adder (18) when said yaw-stabilizing command (s) and said electrical control command (y) are of the same sign.

10. The system as claimed in claim 9, **characterized in that** said third low-pass filter (16) is of the first-order type.

11. The system as claimed in one of claims 9 and 10, **characterized in that** said third time constant of said third low-pass filter (16) is between 1 second and 2 seconds.

Fig. 1

Fig. 2

Fig. 3

Fig. 4

Fig. 5